# EUROPÄISCHE PATENTSCHRIFT

(11) **EP 2 169 256 B1**
(45) Veröffentlichungstag und Bekanntmachung des Hinweises auf die Patenterteilung: **30.05.2012**
(21) Anmeldenummer: 09010849.9
(22) Anmeldetag: 25.08.2009
(51) Int. Cl.: F16F 13/16

(54) **Hydraulisch gedämpftes Aggregatelager an Fahrzeugen, insbesondere an Kraftfahrzeugen**
Hydraulically damped unit bearing on vehicles, particularly in motor vehicles
Palier de groupe à amortissement hydraulique, en particuler dans des véhicules automobiles

(30) Priorität: 25.09.2008 DE 102008049011
(43) Veröffentlichungstag der Anmeldung: 31.03.2010
(73) Patentinhaber: Volkswagen Aktiengesellschaft, 38436 Wolfsburg (DE)
(72) Erfinder: Schulze, Carsten, 38444 Wolfsburg (DE); Hoffmann, Matthias, 38124 Braunschweig (DE)

(56) Entgegenhaltungen:
- EP-A1- 1 798 442
- JP-A- 2002 310 219
- US-A1- 2006 091 281

## Beschreibung

Die Erfindung betrifft ein hydraulisch gedämpftes Aggregatelager an Fahrzeugen, insbesondere Kraftfahrzeugen, gemäß den Merkmalen des Patentanspruches 1.

Aggregatelager in Form von Axiallagern mit hydraulischer Dämpfung sind seit langem in den unterschiedlichsten Ausführungsformen bekannt. So beschreibt die DE 102 13 750 A1 ein Aggregatelager mit hydraulischer Dämpfung, auch als Hydrolager bezeichnet, insbesondere zur Lagerung von Motoren und/oder Getrieben in Kraftfahrzeugen, mit einer Arbeitskammer und einer Ausgleichskammer, die jeweils teilweise elastisch verformbare Wandungen aufweisen und durch eine Trennwand voneinander getrennt, jedoch über einen Dämpfungskanal hydraulisch miteinander verbunden sind, sowie mit einer weiteren Durchtrittsöffnung, die von außen variabel einstellbar ist, wobei die Trennwand eine Entkopplungseinrichtung zur Isolierung hochfrequenter, kleinamplitudiger Schwingungen umfasst und wobei die weitere Durchtrittsöffnung der Entkopplungseinrichtung vor- oder nachgeschaltet ist.

Des Weiteren ist aus der DE 10 2004 015 036 B4 ein hydraulisch gedämpftes Aggregatelager bekannt, dass sich im Wesentlichen aus einem becherförmigen Lagergehäuse, einem im Querschnitt etwa tellerförmigen Lagerkem, zwei gummielastischen Lagerkörpern und einem etwa scheibenförmigen Düsenkörper zusammensetzt. Der Düsenkörper ist in das zweiteilig ausgeführte Lagergehäuse dicht eingesetzt und unterteilt dieses in zwei Hydraulikkammern, die mit einer inkompressiblen Hydraulikflüssigkeit gefüllt sind. In dem Düsenkörper sind Drosselkanäle ausgeführt, die bei statischer und dynamischer Belastung des Aggregatelagers einen Flüssigkeitsaustausch zulassen oder über einen definierten Bereich hinaus unterbinden. Im Verbindungsbereich des zweiteiligen Lagergehäuses ist ferner eine bewegliche Membran eingespannt, die den unteren Hydraulikraum von einem im Bodenbereich des Lagergehäuses gebildeten Ausgleichsraum trennt. Der Ausgleichsraum ist über eine Leitung mit einem Behälter definierten Volumens verbunden in dem ein unter Druck stehendes Gas (z.B. Luft) gespeichert ist. Durch den aufgebrachten Gasdruck in dem Ausgleichsraum, der sich als hydraulischer Druck in die obere Hydraulikkammer fortpflanzt, wird die von dem Antriebsaggregat ausgeübte statische Vorlast teilweise kompensiert, so dass die Lagerkörper bzw. insbesondere der äußere Lagerkörper die statische Belastungen nur teilweise aufnehmen müssen. Dies vermindert die Dauerbelastung der Lagerkörper und erhöht die Ansprechempfindlichkeit des Aggregatelagers auch in der dynamischen Beanspruchung.

Weitere hydraulisch gedämpfte Aggregatelager bzw. Hydrolager sind auch der DE 100 16 654 B4 sowie der DE 10 2005 059 026 A1 zu entnehmen, wobei dieselben zusätzlich Anschläge bzw. Puffer aus elastischem Material aufweisen, die ihrerseits senkrecht zur Hauptbelastungsrichtung des hydraulisch gedämpften Aggregatelagers respektive Axiallagers wirken.

All diesen Lösungen ist gemein, dass im Wesentlichen lediglich Schwingungen in axialer Richtung gedämpft werden. Aus der Praxis ist es jedoch bekannt, dass während des Betriebs eines Aggregats, insbesondere einer Verbrennungskraftmaschine und während der Fahrt des Kraftfahrzeugs auch Schwingungen in radialer Richtung zu verzeichnen sind, die einer Bedämpfung bedürfen.

Um diesem Problem zu begegnen, wird mit der DE 103 34 901 A1 eine Aggregatelagerung für eine Brennkraftmaschine bzw. ein Getriebe in einem Kraftfahrzeug vorgeschlagen, bei der zum einen eine Schwingungsdämpfung im Wesentlichen in Fahrzeughochrichtung bzw. Z-Richtung vorgesehen ist, die durch mindestens ein als an sich bekanntes Axiallager ausgebildetes Hydrolager erfolgt, welches zwischen der Brennkraftmaschine bzw. dem Getriebe und der Fahrzeugkarosserie angeordnet ist. Zum anderen ist eine weitere Schwingungsdämpfung im Wesentlichen in Fahrzeuglängsrichtung bzw. X-Richtung vorgesehen, wobei für die Schwingungsdämpfung in X-Richtung mindestens ein Dämpferelement oder mindestens ein zusätzliches Hydrolager vorgeschlagen werden, welche in besagter X-Richtung zwischen der Brennkraftmaschine bzw. dem Getriebe und der Fahrzeugkarosserie angeordnet sind. Sowohl das als Axiallager ausgebildet Hydrolager als auch das zusätzliche Hydrolager bzw. das Dämpferelement sind als separate Bauteile ausgebildet und werden in geeigneter Weise zueinander positioniert, wobei vorliegend das Axiallager respektive das erste Hydrolager in Fahrzeughochrichtung (Z-Richtung) und das weitere Hydrolager bzw. Dämpferelement in Fahrzeuglängsrichtung (X-Richtung) schwingungsdämpfend wirken. Diese Lösung ist zwar geeignet, eine ausreichende Schwingungsdämpfung sowohl in Fahrzeughochrichtung (Z-Richtung) als auch in Fahrzeuglängsrichtung (X-Richtung) zu bewirken, jedoch sind relativ hohe Aufwendungen bezüglich der Material- und Montagekosten sowie ein erhöhter Bauraum zu verzeichnen. Hier setzt die nachfolgend beschriebene Erfindung an. Schließlich ist aus der EP 1 798 442 A1 ein hydraulisch gedämpftes Aggregatelager an Fahrzeugen bekannt, welches seinerseits zwischen einem Aggregat und einem tragenden Fahrzeugteil angeordnet it. Das Aggregatelager verfügt sowohl über zumindest eine hydraulisch gedämpfte Axiallagereinheit als auch über zumindest eine hydraulisch gedämpfte Radiallagereinheit, welche integral in einem gemeinsamen Lagergehäuse angeordnet sind. Die Axiallagereinheit weist eine Axiallastfeder auf, die ihrerseits das Lagergehäuse des Aggregatelagers in einen ersten, die Axiallagereinheit umfassenden Gehäusebereich und einen zweiten, die Radiallagereinheit umfassenden Gehäusebereich aufteilt. Die Axiallastfeder begrenzt hierbei im Hinblick auf den ersten Gehäusebereich und die Axiallagereinheit eine erste volumenveränderliche Arbeitskammer, die vermittels einer Zwischenplatte von einer ersten volumenveränderlichen Ausgleichskammer separiert, jedoch über einen Dämpfungskanal mit derselben verbunden ist. Im Hinblick auf den zweiten Gehäusebereich und die Radiallagereinheit begrenzt die Axiallastfeder eine in zwei separate Kammerbereich aufgeteilte zweite volumenveränderliche Arbeitskammer.

Aufgabe der Erfindung ist es, im Hinblick auf den Stand der Technik eine Alternative eines hydraulisch gedämpften Aggregatelagers an Fahrzeugen, insbesondere Kraftfahrzeugen, zu schaffen, welches bei verringerten Material- und Montagekosten sowie minimiertem Bauraum eine ausreichende Schwingungsdämpfung sowohl in Fahrzeughochrichtung (Z-Richtung) als auch in Fahrzeuglängsrichtung (X-Richtung) gestattet.

Ausgehend von einem hydraulisch gedämpften Aggregatelager an Fahrzeugen, insbesondere Kraftfahrzeugen, welches seinerseits zwischen einem Aggregat, wie einer Verbrennungskraftmaschine, einem Getriebe oder anderem, und einem tragenden Fahrzeugteil, wie der Karosserie des Fahrzeugs, angeordnet ist; wobei das Aggregatelager sowohl über zumindest eine hydraulisch gedämpfte Axiallagereinheit als auch über zumindest eine hydraulisch gedämpfte Radiallagereinheit verfügt, welche integral in einem gemeinsamen Lagergehäuse angeordnet sind, wobei die Axiallagereinheit eine Axiallastfeder aufweist, die ihrerseits das Lagergehäuse des Aggregatelagers in einen ersten, die Axiallagereinheit umfassenden Gehäusebereich und einen zweiten, die Radiallagereinheit umfassenden Gehäusebereich aufteilt, wobei die Axiallastfeder im Hinblick auf den ersten Gehäusebereich und die Axiallagereinheit eine erste volumenveränderliche Arbeitskammer begrenzt, die vermittels einer Zwischenplatte von einer ersten volumenveränderlichen Ausgleichskammer separiert, jedoch über einen Dämpfungskanal mit derselben verbunden ist, und wobei die Axiallastfeder im Hinblick auf den zweiten Gehäusebereich und die Radiallagereinheit eine in zwei separate Kammerbereiche aufgeteilte zweite volumenveränderliche Arbeitskammer begrenzt, wird die gestellte Aufgabe dadurch gelöst, dass die zweite volumenveränderliche Arbeitskammer vermittels einer koaxial zur Axiallastfeder angeordneten Radiallastfeder von einer zweiten volumenveränderlichen Ausgleichskammer separiert ist, wobei die beiden Kammerbereiche der zweiten Arbeitskammer über je einen Dämpfungskanal mit der zweiten Ausgleichskammer verbunden sind.

Durch diese Maßnahme wird dem Anspruch bezüglich verringerter Material- und Montagekosten sowie minimiertem Bauraum Rechnung getragen, indem eine Schwingungsdämpfung in axialer Richtung des Aggregatelagers vorteilhaft mit einer Schwingungsdämpfung in radialer Richtung desselben in einem gemeinsamen Lagergehäuse kombiniert ist.

Die Unteransprüche beschreiben bevorzugte Weiterbildungen oder Ausgestaltungen der Erfindung.

Danach kann das Aggregatelager derart zwischen einem Aggregat und dem tragenden Fahrzeugteil anordenbar sein, dass die Axiallagereinheit eine Schwingungsdämpfung in Fahrzeughochrichtung (Z-Richtung) und die Radiallagereinheit eine Schwingungsdämpfung in Fahrzeuglängsrichtung (X-Richtung) gestattet.

Des Weiteren kann hier vorgesehen sein, dass zwischen der Axiallastfeder und der Radiallastfeder ein in den zweiten Gehäusebereich axial hineinragender, die zweite Arbeitskammer in besagte zwei separate Kammerbereiche aufteilender Lasttragarm abgestützt ist, wobei die Kammerbereiche in radialer Richtung bzw. in Fahrzeuglängsrichtung (X-Richtung) gesehen hintereinander angeordnet sind.

Weiter vorteilhaft können hierbei die die beiden Kammerbereiche der zweiten Arbeitskammer mit der zweiten Ausgleichskammer verbindenden Dämpfungskanäle durch den Lasttragarm hindurchgeführt sein. Demgegenüber kann es sich gemäß einer weiteren Ausgestaltungsform auch als vorteilhaft erweisen, die die beiden Kammerbereiche der zweiten Arbeitskammer mit der zweiten Ausgleichskammer verbindenden Dämpfungskanäle durch die Radiallastfeder hindurchzuführen.

Wie die Erfindung noch vorsieht, können zur Begrenzung extremer Auslenkungen in radialer Richtung des Aggregatelagers dem Lasttragarm in die beiden Kammerbereiche der zweiten Arbeitskammer radial hineinreichende Pufferelemente zugeordnet sein, die mit Anschlagabschnitten des Lagergehäuses des Aggregatelagers korrespondieren. Besagte Pufferelemente sind hierbei vorzugsweise aus einem Elastomer gebildet.

Was die Axiallastfeder und/oder die Radiallastfeder anbelangt, sind dieselben ebenfalls vorzugsweise aus einem Elastomer gebildet. Das Aggregatelager selbst kann beispielsweise als Rechtecklager mit einem Rechteckquerschnitt oder Rundlager mit einem kreisrunden Querschnitt ausgebildet sein.

Die Erfindung wird nachstehend anhand der in den Zeichnungen schematisch dargestellten Ausführungsbeispiele näher erläutert. Es zeigen:
- Fig. 1: den Längsschnitt einer ersten vorteilhaften Ausführungsform eines erfindungsgemäß ausgebildeten hydraulisch gedämpften Aggregatelagers,
- Fig. 2: den Längsschnitt einer zweiten vorteilhaften Ausführungsform des erfindungsgemäß ausgebildeten hydraulisch gedämpften Aggregatelagers, und
- Fig. 3: den Längsschnitt eines nicht erfindungsgemäßen hydraulisch gedämpften Aggregatelagers.

Beispiel 1, welches unter dem Gegenstand der steht:

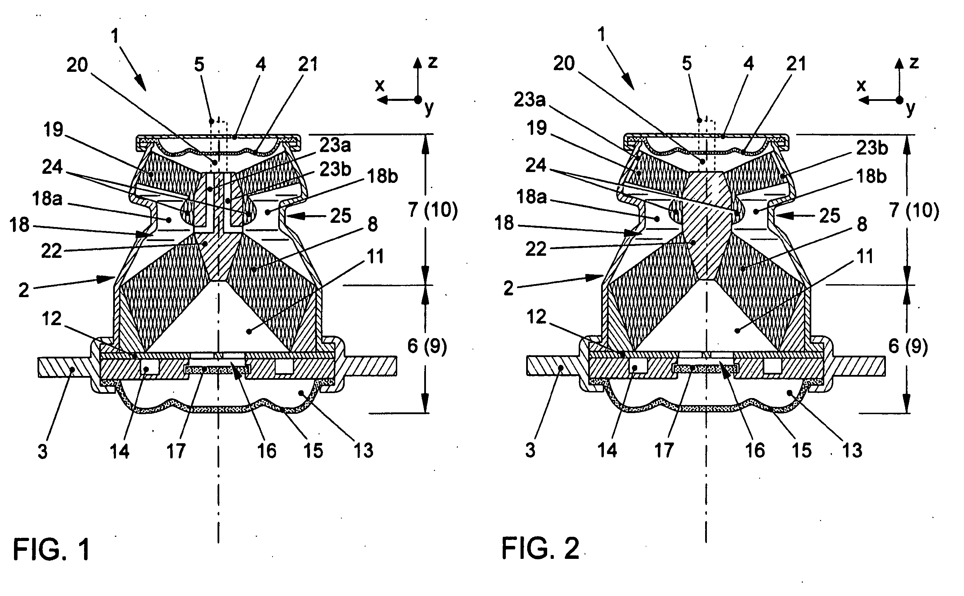

Das in Fig. 1 dargestellte hydraulisch gedämpfte Aggregatelager 1 an Fahrzeugen, insbesondere Kraftfahrzeugen, weist zunächst ein Lagergehäuse 2 auf, welches einenends ein Auflageranschlussstück in Form eines Befestigungsflansches 3 und anderenends einen Gehäusedeckel 4 aufweist, der seinerseits von einem Widerlageranschlussstück, vorliegend beispielgebend in Form eines lediglich angedeuteten Gewindebolzens 5 durchdrungen ist.

Das Aggregatelager 1 kann bekanntermaßen beispielsweise als Rechteck- oder Rundlager ausgebildet und zwischen einem nicht näher dargestellten Aggregat, wie einer Verbrennungskraftmaschine, einem Getriebe oder anderem, und einem ebenfalls nicht näher dargestellten tragenden Fahrzeugteil, wie der Karosserie des Fahrzeugs, angeordnet sein und sich auf denselben abstützen.

Vorliegend verfügt das Aggregatelager 1 sowohl über eine hydraulisch gedämpfte Axiallagereinheit 6 als auch über eine hydraulisch gedämpfte Radiallagereinheit 7, welche integral in dem gemeinsamen Lagergehäuse 2 angeordnet sind.

Gemäß dem vorliegenden Ausführungsbeispiel ist das Aggregatelager 1 derart zwischen einem Aggregat und dem tragenden Fahrzeugteil angeordnet, dass die Axiallagereinheit 6 eine Schwingungsdämpfung in Fahrzeughochrichtung (Z-Richtung) und die Radiallagereinheit 7 eine Schwingungsdämpfung in Fahrzeuglängsrichtung (X-Richtung) gestattet. Die Erfindung beschränkt sich jedoch nicht auf diese konkrete Ausführungsform, sondern erfasst jedwede Ausrichtung des Aggregatelagers 1. So können die Axiallagereinheit 6 auch in Fahrzeuglängsrichtung (X-Richtung) und die Radiallagereinheit 7 in Fahrzeughochrichtung (Z-Richtung) ausgerichtet sein (nicht näher dargestellt).

Wie der Fig. 1 weiter zu entnehmen ist, weist die Axiallagereinheit 6 eine Axiallastfeder 8 auf, die ihrerseits das Lagerhäuser 2 des Aggregatelagers 1 fluiddicht in einen ersten, die Axiallagereinheit 6 umfassenden Gehäusebereich 9 und einen zweiten, koaxial zu demselben angeordneten, die Radiallagereinheit 7 umfassenden zweiten Gehäusebereich 10 aufteilt.

Besagte Axiallastfeder 8 ist aus einem Elastomer mit einem bezogen auf die Zeichnungsfigur nach unten hohl geformten konischen Querschnitt bzw. bei Rundlagern als hohler Kegelstumpf ausgebildet und begrenzt im Hinblick auf den ersten Gehäusebereich 9 und die Axiallagereinheit 6 in konventioneller Art und Weise eine erste volumenveränderliche Arbeitskammer 11, die vermittels einer Zwischenplatte 12 von einer ersten volumenveränderlichen Ausgleichskammer 13 separiert, jedoch über einen Dämpfungskanal 14 mit derselben hydraulisch verbunden ist.

Die erste Ausgleichskammer 13 wird bekanntermaßen vermittels einer elastisch ausgebildeten Kappe 15 nach unten begrenzt. In die Zwischenplatte 12 sind des Weiteren ein an sich bekannter Bypass 16 sowie eine Entkoppelmembran 17, die sich um einen geringen Betrag axial bewegen kann und der Entkoppelung von Schwingungen mit kleinen Amplituden und hohen Frequenzen dient, integriert.

Fernerhin begrenzt die Axiallastfeder 8 im Hinblick auf den zweiten Gehäusebereich 10 und die Radiallagereinheit 7 eine in zwei separate Kammerbereiche 18a, 18b aufgeteilte zweite volumenveränderliche Arbeitskammer 18, die vermittels einer koaxial zur Axiallastfeder 8 angeordneten, jedoch demgegenüber mit einem nach oben hohl geformten konischen Querschnitt bzw. bei Rundlagern als hohler Kegelstumpf ausgebildeten Radiallastfeder 19 aus einem an sich bekannten geeigneten Elastomer von einer zweiten volumenveränderlichen Ausgleichskammer 20 separiert ist.

Die zweite Ausgleichskammer 20 wird vermittels einer elastisch ausgebildeten Kappe 21 nach oben begrenzt.

Zwischen der Axiallastfeder 8 und der Radiallastfeder 19 ist ein in den zweiten Gehäusebereich 10 axial hineinragender, zweckmäßigerweise die zweite Arbeitskammer 18 in besagte zwei separate Kammerbereiche 18a, 18b aufteilender Lasttragarm 22 abgestützt, der seinerseits mit dem Widerlageranschlussstück, vorliegend mit dem Gewindebolzen 5 wirkverbunden ist. Besagter Lasttragarm 22 ist aus einem weitestgehend starren Material, vorzugsweise aus einem Metall oder einem Kunststoff gefertigt.

Die Erfindung beschränkt sich jedoch nicht auf besagten Lasttragarm 22 als Mittel zur Aufteilung der Arbeitskammer 18 in die Kammerbereich 18a, 18b, sondern erfasst jedwedes an sich bekanntes und geeignetes Mittel dazu, wie beispielsweise separate Trennwände o. dgl. (nicht näher dargestellt).

Die beiden Kammerbereiche 18a, 18b sind gemäß diesem Ausführungsbeispiel in Fahrzeuglängsrichtung (X-Richtung) gesehen hintereinander angeordnet und über je einen Dämpfungskanal 23a, 23b mit der zweiten Ausgleichskammer 20 hydraulisch verbunden. Vorliegend sind die die beiden Kammerbereiche 18a, 18b der zweiten Arbeitskammer 18 mit der zweiten Ausgleichskammer 20 verbindenden Dämpfungskanäle 23a, 23b durch besagten Lasttragarm 22 hindurchgeführt.

Überdies sind dem Lasttragarm 22 zur Begrenzung extremer Auslenkungen in radialer Richtung des Aggregatelagers 1 Pufferelemente 24 aus vorzugsweise einem Elastomer zugeordnet, die in die beiden Kammerbereiche 17a, 17b der zweiten Arbeitskammer 17 radial hineinreichen und mit Anschlagabschnitten 25 des Lagergehäuses 2 des Aggregatelagers 1 korrespondieren.

Beispiel 2, welches unter dem Gegenstand der Erfindung steht:

Das Ausführungsbeispiel nach Figur 2 unterscheidet sich zum vorbeschriebenen lediglich dadurch, dass die die beiden Kammerbereiche 18a, 18b der zweiten Arbeitskammer 18 mit der zweiten Ausgleichskammer 20 verbindenden Dämpfungskanäle 23a, 23b durch die Radiallastfeder 19 hindurchgeführt sind.

Nachfolgend wird die Funktion der Erfindung anhand des Ausführungsbeispieles nach Fig. 1 bzw. 2 näher beschrieben:

Gesetzt den Fall, es ist eine Druckverformung durch Relativbewegungen zwischen Aggregat und Karosserie des Kraftfahrzeugs in axialer Richtung respektive in Fahrzeughochrichtung (Z-Richtung) auf die Axiallastfeder 8 zu verzeichnen, wird nicht näher gezeigtes hydraulisches Dämpfungsfluid aus der Arbeitskammer 11 der Axiallagereinheit 6 durch den Dämpfungskanal 14 desselben hindurch in die Ausgleichskammer 13 gepumpt, wobei sich die elastisch ausgebildete Kappe 15 frei nach unten verformen kann. Durch diese an sich bekannte Maßnahme ist eine Dämpfung von Schwingungen in axialer Richtung des Aggregatelagers 1 bewirkt.

Gesetzt weiter den Fall, es sind Schwingungen bzw. Relativbewegung zwischen Aggregat und Karosserie des Kraftfahrzeugs in Fahrzeuglängsrichtung (X-Richtung), beispielsweise durch positive oder negative Beschleunigung (Anfahren, Abbremsen) des Fahrzeugs zu verzeichnen, wird in Abhängigkeit von der Kraftrichtung hydraulisches Dämpfungsfluid entweder aus dem Kammerbereich 18a oder dem Kammerbereich 18b der Arbeitskammer 18 der Radiallagereinheit 7 durch den jeweils zugeordneten Dämpfungskanal 23a, 23b hindurch in die zugeordnete Ausgleichskammer 20 gepumpt, wobei sich die elastisch ausgebildete Kappe 21 frei nach oben verformt. Hierdurch ist vorteilhaft eine Dämpfung von Schwingungen in radialer Richtung des Aggregatelagers 1 bewirkt.

Beispiel 3, welches nicht unter dem Gegenstand der Erfindung steht:

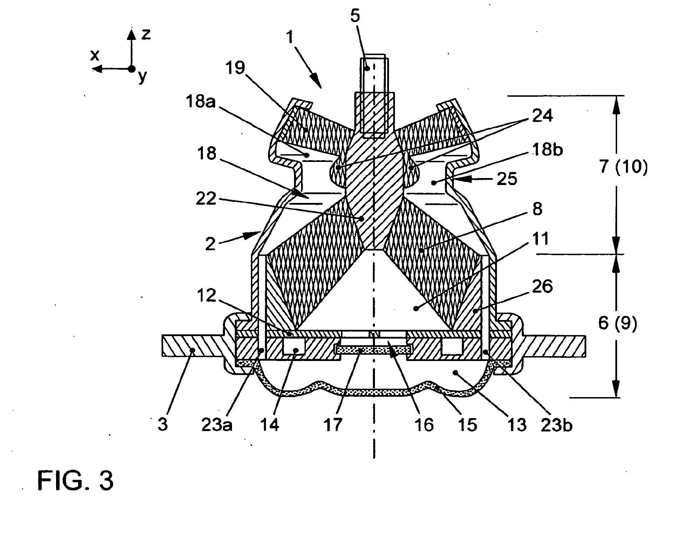

Betrachtet man nunmehr das Ausführungsbeispiel nach Fig. 3, so ist zunächst im Wesentlichen festzustellen, dass hier auf eine zweite separate Ausgleichskammer 20 (Radiallagereinheit 7) verzichtet wurde.

Statt dessen wird die Aufgabe einer solchen zweiten Ausgleichskammer 20 nunmehr durch die erste Ausgleichskammer 13 der Axiallagereinheit 6 mit übernommen, indem die beiden Kammerbereiche 18a, 18b der zweiten Arbeitskammer 18 der Radiallagereinheit 7 über je einen Dämpfungskanal 23a, 23b mit der ersten Ausgleichskammer 13 der Axiallagereinheit 6 hydraulisch verbunden sind.

Vorteilhaft resultieren aus einer derartigen Ausbildung des hydraulisch gedämpften Aggregatelagers 1 Bauraum- und Kostenersparnis.

Die Dämpfungskanäle 18a, 18b der zweiten Arbeitskammer 18 sind vorliegend durch einen Stützrahmen 26 für die Axiallastfeder 8 sowie durch die Zwischenplatte 12 hindurchgeführt.

Um wie bereits oben dargelegt, eine undefinierte und möglicherweise nachteilige gegenseitige Beeinflussung der Axiallagereinheit 6 und Radiallagereinheit 7 zu vermeiden, ist in diesem Fall der Dämpfungskanal 14 der Axiallagereinheit 6 als Drosselkanal oder sind die Dämpfungskanäle 23a, 23b der Radiallagereinheit 7 als Drosselkanäle, d. h., mit verringertem hydraulischen Strömungsquerschnitt ausgebildet.

### Bezugszeichenliste

- 1: Aggregatelager
- 2: Lagergehäuse
- 3: Befestigungsflansch
- 4: Gehäusedeckel
- 5: Gewindebolzen
- 6: Axiallagereinheit
- 7: Radiallagereinheit
- 8: Axiallastfeder
- 9: erster Gehäusebereich (Lagergehäuse 2)
- 10: zweiter Gehäusebereich (Lagergehäuse 2)
- 11: Arbeitskammer (Axiallagereinheit 6)
- 12: Zwischenplatte
- 13: Ausgleichskammer (Axiallagereinheit 6)
- 14: Dämpfungskanal
- 15: Kappe
- 16: Bypass
- 17: Entkoppelmembran
- 18: Arbeitskammer (Radiallagereinheit 7)
- 18a: Kammerbereich (Arbeitskammer 18)
- 18b: Kammerbereich (Arbeitskammer 18)
- 19: Radiallastfeder
- 20: Ausgleichskammer (Radiallagereinheit 7)
- 21: Kappe
- 22: Lasttragarm
- 23a: Dämpfungskanal
- 23b: Dämpfungskanal
- 24: Pufferelemente
- 25: Anschlagabschnitte (Lagergehäuse 2)
- 26: Stützrahmen

## Patentansprüche

1. Hydraulisch gedämpftes Aggregatelager (1) an Fahrzeugen, insbesondere Kraftfahrzeugen, welches seinerseits zwischen einem Aggregat, wie einer Verbrennungskraftmaschine, einem Getriebe oder anderem, und einem tragenden Fahrzeugteil, wie der Karosserie des Fahrzeugs, angeordnet ist, wobei das Aggregatelager (1) sowohl über zumindest eine hydraulisch gedämpfte Axiallagereinheit (6) als auch über zumindest eine hydraulisch gedämpfte Radiallagereinheit (7) verfügt, welche integral in einem gemeinsamen Lagergehäuse (2) angeordnet sind, wobei die Axiallagereinheit (6) eine Axiallastfeder (8) aufweist, die ihrerseits das Lagergehäuse (2) des Aggregatelagers (1) in einen ersten, die Axiallagereinheit (6) umfassenden Gehäusebereich (9) und einen zweiten, die Radiallagereinheit (7) umfassenden Gehäusebereich (10) aufteilt, wobei die Axiallastfeder (8) im Hinblick auf den ersten Gehäusebereich (9) und die Axiallagereinheit (6) eine erste volumenveränderliche Arbeitskammer (11) begrenzt, die vermittels einer Zwischenplatte (12) von einer ersten volumenveränderlichen Ausgleichskammer (13) separiert, jedoch über einen Dämpfungskanal (14) mit derselben verbunden ist, und wobei die Axiallastfeder (8) im Hinblick auf den zweiten Gehäusebereich (10) und die Radiallagereinheit (7) eine in zwei separate Kammerbereiche (18a, 18b) aufgeteilte zweite volumenveränderliche Arbeitskammer (18) begrenzt, **dadurch gekennzeichnet, dass** die zweite volumenveränderliche Arbeitskammer (18) vermittels einer koaxial zur Axiallastfeder (8) angeordneten Radiallastfeder (19) von einer zweiten volumenveränderlichen Ausgleichskammer (20) separiert ist, wobei die beiden Kammerbereiche (18a, 18b) der zweiten Arbeitskammer (18) über je einen Dämpfungskanal (23a, 23b) mit der zweiten Ausgleichskammer (20) verbunden sind.

2. Aggregatelager (1) nach Anspruch 1, **dadurch gekennzeichnet, dass** das Aggregatelager (1) derart zwischen einem Aggregat und dem tragenden Fahrzeugteil anordenbar ist, dass die Axiallagereinheit (6) eine Schwingungsdämpfung in Fahrzeughochrichtung (Z-Richtung) und die Radiallagereinheit (7) eine Schwingungsdämpfung in Fahrzeuglängsrichtung (X-Richtung) gestattet.

3. Aggregatelager (1) nach Anspruch 1 oder 2, **dadurch gekennzeichnet, dass** zwischen der Axiallastfeder (8) und der Radiallastfeder (19) ein in den zweiten Gehäusebereich (10) axial hineinragender, die zweite Arbeitskammer (18) in besagte zwei separate Kammerbereiche (18a, 18b) aufteilender Lasttragarm (22) abgestützt ist, wobei die Kammerbereiche (18a, 18b) in radialer Richtung respektive in Fahrzeuglängsrichtung (X-Richtung) gesehen hintereinander angeordnet sind.

4. Aggregatelager (1) nach Anspruch 3, **dadurch gekennzeichnet, dass** die die beiden Kammerbereiche (18a, 18b) der zweiten Arbeitskammer (18) mit der zweiten Ausgleichskammer (20) verbindenden Dämpfungskanäle (23a, 23b) durch den Lasttragarm (22) hindurchgeführt sind.

5. Aggregatelager (1) nach einem der Ansprüche 1 bis 3, **dadurch gekennzeichnet, dass** die die beiden Kammerbereiche (18a, 18b) der zweiten Arbeitskammer (18) mit der zweiten Ausgleichskammer (20) verbindenden Dämpfungskanäle (23a, 23b) durch die Radiallastfeder (19) hindurchgeführt sind.

6. Aggregatelager (1) nach Anspruch 3, **dadurch gekennzeichnet, dass** dem Lasttragarm (22) in die beiden Kammerbereiche (18a, 18b) der zweiten Arbeitskammer (18) radial hineinreichende Pufferelemente (24) zugeordnet sind, die mit Anschlagabschnitten (25) des Lagergehäuses (2) des Aggregatelagers (1) korrespondieren.

7. Aggregatelager (1) nach Anspruch 6, **dadurch gekennzeichnet, dass** die Pufferelemente (24) vorzugsweise aus einem Elastomer gebildet sind.

8. Aggregatelager (1) nach einem der Ansprüche 1 bis 7, **dadurch gekennzeichnet, dass** die Axiallastfeder (8) und/oder die Radiallastfeder (19) vorzugsweise aus einem Elastomer gebildet sind.

9. Aggregatelager (1) nach einem der Ansprüche 1 bis 8, **dadurch gekennzeichnet, dass** das Aggregatelager (1) als Rechteck- oder Rundlager ausgebildet ist.

## Claims

1. Hydraulically damped assembly mount (1) on vehicles, in particular motor vehicles, which is itself arranged between an assembly, such as an internal combustion engine, a transmission or the like, and a carrying vehicle part, such as the vehicle body, the assembly mount (1) having both at least one hydraulically damped axial mount unit (6) and at least one hydraulically damped radial mount unit (7) which are arranged integrally in a common mount housing (2), the axial mount unit (6) having an axial load spring (8) which, in turn, divides the mount housing (2) of the assembly mount (1) into a first housing region (9) comprising the axial mount unit (6) and a second housing region (10) comprising the radial mount unit (7), the axial load spring (8), with regard to the first housing region (9), and the axial mount unit (6) delimiting a first variable-volume working chamber (11) which is separated by means of an intermediate plate (12) from a first variable-volume compensating chamber (13), but is connected to the latter via a damping duct (14), and the axial load spring (8), with regard to the second housing region (10) and the radial mount unit (7), delimiting a second variable-volume working chamber (18) divided into two separate chamber regions (18a, 18b), **characterized in that** the second variable-volume working chamber (18) is separated from a second variable-volume compensating chamber (20) by means of a radial load spring (19) arranged coaxially to the axial load spring (8), the two chamber regions (18a, 18b) of the second working chamber (18) being connected to the second compensating chamber (20) in each case via a damping duct (23a, 23b).

2. Assembly mount (1) according to Claim 1, **characterized in that** the assembly mount (1) can be arranged between an assembly and the carrying vehicle part in such a way that the axial mount unit (6) allows vibration damping in the vehicle vertical direction (Z-direction) and the radial mount unit (7) allows vibration damping in the vehicle longitudinal direction (X-direction).

3. Assembly mount (1) according to Claim 1 or 2, **characterized in that** a load carrying arm (22) projecting axially into the second housing region (10) and dividing the second working chamber (18) into the said two separate chamber regions (18a, 18b) is supported between the axial load spring (8) and the radial load spring (19), the chamber regions (18a, 18b) being arranged one behind the other in the radial direction or as seen in the vehicle longitudinal direction (X-direction).

4. Assembly mount (1) according to Claim 3, **characterized in that** the damping ducts (23a, 23b) connecting the two chamber regions (18a, 18b) of the second working chamber (18) to the second compensating chamber (20) are led through the load carrying arm (22) .

5. Assembly mount (1) according to one of Claims 1 to 3, **characterized in that** the damping ducts (23a, 23b) connecting the two chamber regions (18a, 18b) of the second working chamber (18) to the second compensating chamber (20) are led through the radial load spring (19) .

6. Assembly mount (1) according to Claim 3, **characterized in that** the load carrying arm (22) is assigned buffer elements (24) which extend radially into the two chamber regions (18a, 18b) of the second working chamber (18) and which match with abutment portions (25) of the mount housing (2) of the assembly mount (1).

7. Assembly mount (1) according to Claim 6, **characterized in that** the buffer elements (24) are formed preferably from an elastomer.

8. Assembly mount (1) according to one of Claims 1 to 7, **characterized in that** the axial load spring (8) and/or the radial load spring (19) are/is formed preferably from an elastomer.

9. Assembly mount (1) according to one of Claims 1 to 8, **characterized in that** the assembly mount (1) is designed as a rectangular or circular mount.

## Revendications

1. Palier de groupe (1) à amortissement hydraulique pour des véhicules, en particulier des véhicules automobiles, qui est disposé pour sa part entre un groupe, comme un moteur à combustion interne, une transmission ou autre, et une partie porteuse du véhicule, comme la carrosserie du véhicule, le palier de groupe (1) disposant à la fois d'au moins une unité de palier axial à amortissement hydraulique (6) et d'au moins une unité à palier radial (7) à amortissement hydraulique, lesquelles unités sont disposées intégralement dans un boîtier de palier commun (2), l'unité de palier axial (6) présentant un ressort de charge axial (8), qui pour sa part divise le boîtier de palier (2) du palier de groupe (1) en une première région de boîtier (9) comprenant l'unité de palier axial (6) et une deuxième région de boîtier (10) comprenant l'unité de palier radial (7), le ressort de charge axial (8), en ce qui concerne la première région de boîtier (9) et l'unité de palier axial (6), limitant une première chambre de travail (11) de volume variable, qui est séparée d'une première chambre de compensation (13) de volume variable par une plaque intermédiaire (12), mais qui est connectée à cette chambre de compensation par un canal d'amortissement (14), et le ressort de charge axial (8), en ce qui concerne la deuxième région de boîtier (10) et l'unité de palier radial (7), limitant une deuxième chambre de travail (18) de volume, variable divisée en deux régions de chambre séparées (18a, 18b), **caractérisé en ce que** la deuxième chambre de travail (18) de volume variable est séparée d'une deuxième chambre de compensation (20) de volume variable par un ressort de charge radial (19) disposé coaxialement au ressort de charge axial (8), les deux régions de chambre (18a, 18b) de la deuxième chambre de travail (18) étant connectées à la deuxième chambre de compensation (20) par un canal d'amortissement respectif (23a, 23b).

2. Palier de groupe (1) selon la revendication 1, **caractérisé en ce que** le palier de groupe (1) peut être disposé entre un groupe et la partie porteuse du véhicule de telle sorte que l'unité de palier axial (6) permette un amortissement des oscillations dans la direction verticale du véhicule (direction Z) et que l'unité de palier radial (7) permette un amortissement des oscillations dans la direction longitudinale du véhicule (direction X).

3. Palier de groupe (1) selon la revendication 1 ou 2, **caractérisé en ce qu'**entre le ressort de charge axial (8) et le ressort de charge radial (19) est supporté un bras de support de charge (22) pénétrant axialement dans la deuxième région de boîtier (10), divisant la deuxième chambre de travail (18) en lesdites deux régions de chambre séparées (18a, 18b), les régions de chambre (18a, 18b) étant disposées l'une derrière l'autre dans la direction radiale, considéré respectivement dans la direction longitudinale du véhicule (direction X).

4. Palier de groupe (1) selon la revendication 3, **caractérisé en ce que** les canaux d'amortissement (23a, 23b) reliant les deux régions de chambre (18a, 18b) de la deuxième chambre de travail (18) . à la deuxième chambre de compensation (20) sont guidés à travers le bras de support de charge (22).

5. Palier de groupe (1) selon l'une quelconque des revendications 1 à 3, **caractérisé en ce que** les canaux d'amortissement (23a, 23b) reliant les deux régions de chambre (18a, 18b) de la deuxième chambre de travail (18) à la deuxième chambre de compensation (20) sont guidés à travers le ressort de charge radial (19).

6. Palier de groupe (1) selon la revendication 3, **caractérisé en ce que** des éléments tampon (24) s'étendant radialement dans les deux régions de chambre (18a, 18b) de la deuxième chambre de travail (18) sont associés au bras de support de charge (22), et correspondent avec des portions de butée (25) du boîtier de palier (2) du palier de groupe (1).

7. Palier de groupe (1) selon la revendication 6, **caractérisé en ce que** les éléments tampon (24) sont de préférence formés en un élastomère.

8. Palier de groupe (1) selon l'une quelconque des revendications 1 à 7, **caractérisé en ce que** le ressort de charge axial (8) et/ou le ressort de charge radial (19) sont de préférence formés en un élastomère.

9. Palier de groupe (1) selon l'une quelconque des revendications 1 à 8, **caractérisé en ce que** le palier de groupe (1) est réalisé sous forme de palier rectangulaire ou rond.
